# EUROPEAN PATENT SPECIFICATION

(11) **EP 3 448 556 B1**
(45) Date of publication and mention of the grant of the patent: **12.08.2026**
(21) Application number: 17734495.9
(22) Date of filing: 24.04.2017
(51) Int. Cl.: B01J 20/26, B01J 20/28, B01J 20/30, C02F 1/28, C02F 1/68, C09K 3/32, C08G 18/36, C08G 18/76, C08G 18/72

(54) **HIGHLY ADSORBENT AND ABSORBENT CAPILLARY HYDROPHOBIC POLYMER AND CORRESPONDING MANUFACTURING PROCESS**
HOCHADSORBIERENDES UND -ABSORBIERENDES HYDROPHOBES KAPILLARPOLYMER UND ZUGEHÖRIGES HERSTELLUNGSVERFAHREN
POLYMÈRE HYDROPHOBE CAPILLAIRE EXTRÊMEMENT ADSORBANT ET ABSORBANT, ET PROCÉDÉ DE FABRICATION CORRESPONDANT

(30) Priority: 27.04.2016 IT UA20162931
(43) Date of publication of application: 06.03.2019
(73) Proprietor: Ceccarini, Vittorio, 61121 Pesaro (PU) (IT)
(72) Inventor: Ceccarini, Vittorio, 61121 Pesaro (PU) (IT)
(74) Representative: Montebelli, Marco
(86) International application number: PCT/IT2017/000086
(87) International publication number: WO 2017/187466

(56) References cited:
- EP-A1- 1 911 781
- WO-A1-2018/152608
- WO-A2-99/12987
- US-A1- 2011 293 374

## Description

### Technical Field

This invention relates to an adsorbent and absorbent capillary hydrophobic polymer and to the related process for its production. More particularly, this invention relates to a polymer derived from natural and synthetic oily substances, able to contain, remove and recover oil, hydrocarbons and chemical products of non-aqueous matrix in the event of spills or leaks of them inside or outside water.

The high fluidity of the polymer allows direct injection into moulds for making new manufactured products.

The product is environmentally-friendly because it is biodegradable and uses components with low toxicity as the expanding agent.

The hydrophobic capacity is guaranteed by the use of amorphous silica superficially treated with polyalkylsiloxane.

The composition of the product allows multiple cycles of product re-use and recovery of the oily substances spilled.

Manufactured products made using the above-mentioned polymer may be moulded and/or machined in various forms such as booms, pillows, carpets, floccules, powders, sheets, rolls, pellets, cords, bags, etc. in order to meet the different requirements in the event of industrial, commercial and domestic leaks.

### Background Art

Despite technological progress, spills of oil, hydrocarbons, solvents and chemical products are still a serious problem that not only damages the environment by polluting oceans, ports, rivers, lakes and land, but also compromises the health of the affected population.

Leaks or spills may occur at all stages of industrial production of oil and of the above-mentioned products, also causing significant economic losses.

The statistics on oil spills from oil tankers show that between 1970 and 2014 more than 10,000 incidents were recorded, with 6,000,000 tons of oil leaked (see http://www.itopf.com/knowledge-resources/data-statistics/statistics).

The trend in the phenomenon relative to incidents involving oil tankers is falling, but other events such as earthquakes, tornadoes, floods, fires, human errors, war, terrorism and crime are definitely not, as we can all see almost daily in the national and international news. For this reason, improving the means for containing and eliminating the above-mentioned spills is an important and right and proper commitment.

There are many prior art solutions for absorbing, containing and removing oil spills. There are prior art floating fabric belts for containing spills, used since the first incidents involving oil tankers: the pollutant is adsorbed and absorbed by the fabric which is then wrung out to recover oil and to allow re-use of the belt.

Actual possibilities for re-use of such devices are very limited, and depend on the density of the pollutant. Moreover, disposal of the belts causes further harm to the environment.

Traditional methods for absorbing and containing small spills using straw, sand, sawdust, vermiculite, etc. are well-known.

3M^{™} Oil & Petroleum Sorbents are products available on the market, designed for controlling and recovering oil and other oil-derived fluids, on land and in water. They repel and do not absorb water, whilst they absorb hydrocarbon-based liquids (as indicated on the website http://multimedia.3m.com/mws/media/4136390/3m-oil-petroleum-sorbent-product-information-sheet.pdf).

Said sorbents are made of polypropylene fibres (type T) and polypropylene mixed with polyester (type HP). However, said products have several disadvantages: it is not possible to use them on aqueous liquids or aggressive liquids, such as strong acids, caustic oxidizers or reactive chemical products. In particular, there is the risk of degradation with the following substances: oleum, chlorosulphonic acid, liquid bromine, fuming nitric acid, chromic acid, sulphuric acid and hydrogen peroxide. The product is disposed of by incineration.

There are also absorbent products available on the market, developed by the company Absorbent, Inc., made of 100% virgin cellulose fibre reclaimed from the pulp and paper production process, which act on liquid spills, absorbing them by capillarity and locking the waste in fibrous cores (as indicated on the website http://www.socksandpads.com/about_us_page.html).Those products are available in two separate lines: Absorbent GP for general use, in situations in which all types of liquids must be absorbed and removed; whilst Absorbent W absorbs hydro-carbons since it is water-repellent, and therefore is suitable for use in water.

Both of the above-mentioned products have two main disadvantages: they cannot be re-used and they only work on oily substances.

One method for separating hydrocarbons from liquids containing hydrocarbons is described in United States patent US 6841077 B2 granted on 11 January 2005. filtration media is presented, employing polymeric absorbents comprising a material selected from the group consisting of: styrene, pentadiene, cyclopentadiene, butylene, ethylene, isoprene, butadiene, propylene and mixtures thereof, and a filtration enabler intimately mixed with the absorbent polymer. Upon contact with a hydrocarbon containing liquid, said liquid partially dissolves the absorbent polymer forming a partial filtration barrier prior to the filtration media substantially absorbing the hydrocarbons, and allowing hydrocarbon-free liquid to flow through the filtration media. In situations of a leak or spill wherein an excess of hydrocarbons is present, the filtration media forms a plug to seal and prevent further discharge of the hydrocarbons. The filtration media may be placed inside a portable container for insertion into an existing drain such that hydrocarbon containing liquid is filtered through the device allowing hydrocarbon-free liquid to flow from the device.

A process for treating water for removal of oil and water-soluble petroleum oil components is described in European patent EP 0901805 published on 17 March 1999 in the name of the company Amcol International Corporation.

That water treatment process involves removal of a majority of the water-insoluble petroleum oil components using an adsorbent, such as organophilic clay or an acid-activated smectite clay, such as acid-activated calcium bentonite clay, to provide a reduced-oil produced water in a first pretreatment step and then treating the reduced-oil produced water with a macroreticular adsorbent resin, such as styrene cross-linked with divinylbenzene, or a polyvinyl pyridine resin to remove marginally water-soluble petroleum oil components, such as C6+ carboxylic acids, phenolics, naphthenic carboxylic acid compounds and aromatic carboxylic acids, such as benzene carboxylic acids.

US 2011/0239974 A1 discloses an absorbent material suitable for absorbing oils or hydrocarbons as spills, wastes or losses on water surfaces. The material is an hydrophobic polymer, derived from a first component comprising polyester polyol substances and a second component (B) comprising synthetic oily substances. The hydrophobic polymer is obtained from mixing these polyester polyol substances with water, surfactant, amine catalyst, metallic catalyst, a stabilizer, a polydimethylsiloxane, an expanding agent, a chain extensor, a hydrophobic agent and further mixing with an MDI polymer derived from 4,4'-diphenylmethane diisocyanate, 2,4'-diphenylmethane diisocyanate and TDI polymer derived from toluene diisocyanate.

In fact, the prior art shows how it is still necessary to find and develop new, more effective solutions, in terms of technology and costs, designed to contain, remove and recover substances such as oil, hydrocarbons and chemical products of non-aqueous matrix in the event of spills or leaks of them inside or outside water.

In particular, the main problems of the existing products are listed below:
- limited capacity for re-use;
- limited range of safe applications;
- biodegradability;
- limited capacity for absorption and adsorption.

### Disclosure of the Invention

The main aim of the invention is to overcome those disadvantages and to provide an invention with high and stable levels of hydrophobic performance, that can be re-used many times and that is rapidly biodegradable.

Accordingly, this invention achieves those aims with an adsorbent and absorbent capillary hydrophobic polymer according to claim 4, obtained by means of a specific preparation process, namely the process of claim 1.

The hydrophobic polymer according to the invention adsorbs and absorbs oil, hydrocarbons and chemical products of a non-aqueous matrix in the event of spills or leaks of them, inside or outside water.

The substances indicated above are absorbed in the cells of the polymer and adsorbed on its surface.

### Brief Description of the Drawings

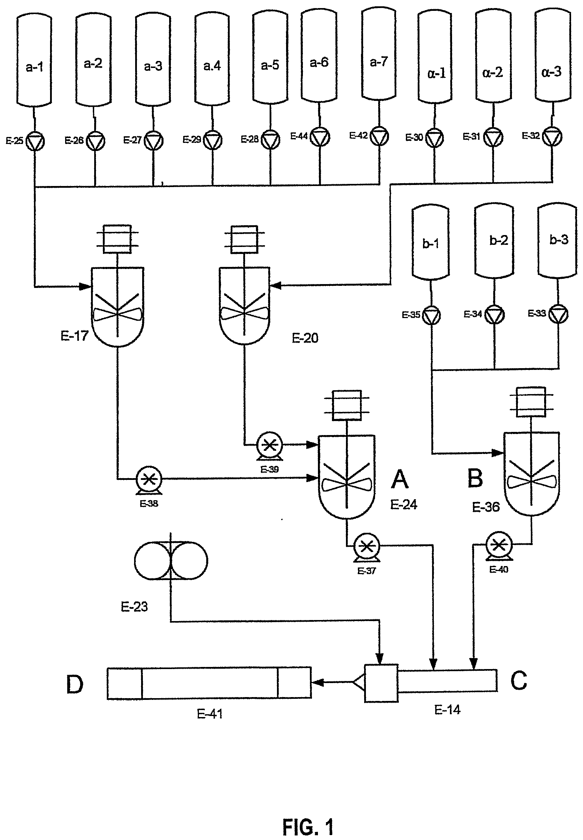

Figure 1 shows the flow chart of the process for production of a highly adsorbent and absorbent capillary hydrophobic polymer C and a manufactured product D derived from it, where:
- al - a7, α-1 - α-3, b1 - b3 represent sub-components of the polymer (C), which are contained in tanks;
E25 - E35, E42 - E44 represent dosing devices for dosing the above-mentioned components;
E-17 represents a first container (or mixer);
E-20 represents a second container (or mixer);
E-24 represents a third container (or mixer);
E-36 represents a fourth container (or mixer);
E-14 represent an injection machine;
E-23 represents a compressed air system;
E-41 represents a mould;
A represents a first component of the polymer (C), derived from natural oily substances; B represents a second component of the polymer (C), derived from synthetic oily substances, such as TDI and MDI polymers.

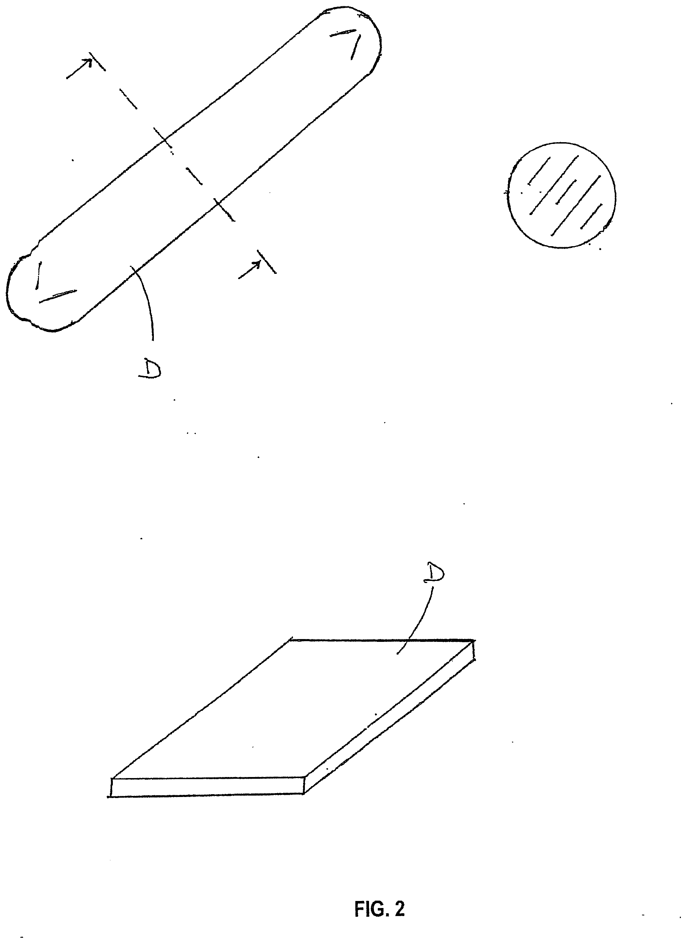

Figure 2 illustrates two possible embodiments of manufactured products (D) constituted of the polymer (C): a "sausage"-shaped floating boom and a mat.

### Detailed Description of Preferred Embodiment of the Invention

The adsorbent and absorbent capillary hydrophobic polymer (C) according to the invention comprises:
- a first component (A) obtained from a mix of two agents (a-0, α-o), respectively obtained from a mix of sub-components (a-1 - a-7, α-1 - α-3), the first agent (a-0) being obtained from a mix of first sub-components (a-1 - a-7):
- vegetable oil (a-1) derived from palms, coconuts, sunflowers, castor beans, linseed, passion fruit and rapeseed;
- deionized water (a-2);
- a surfactant (a-3) with an ethoxylation grade comprised between 2 and 6 moles, like nonylphenol ethoxylate;
- an aminic catalyst and reaction accelerator (a-4) selected dimethylcyclohexylamine, dimethylbenzylamine, pentamethyldiethylenetriamine or 2-dimethylaminoethyl ether;
- a metallic catalyst (a-5) selected from: tin octoate or dibutyltin dilaurate;
- a mass/volume stabilizer (a-6) selected from vegetable wax or paraffinic oil;
- polydimethylsiloxane as cream stabilizing agent (a-7);
   the second agent (α-0) being obtained from a mix of second sub-components (α-1 - α-3);
- an expanding agent (α-1),: in particular methyl formate;
- a chain extensor agent (α-2) selected from 3-aminomethyl-3,5,5-trimethylcyclohexylamine and monoethylene glycol;
- amorphous synthetic silica superficially treated with polyalkylsiloxane as hydrophobic agent (α-3);
- a second component (B) obtained from a mix/mixture of third sub-components (b-1 - b-3):
- a polymer MDI (b-1) derived from 4,.4- diphenylmethane diisocyanate, 2,.4- diphenylmethane diisocyanate, 2,.2- diphenylmethane diisocyanate, with average functionality between 2.5 and 3;
- polymer TDI (b-2): 2,4- toluene diisocyanate;
- a flow agent (b-3), like turpentine.

### PROCESS FOR OBTAINING THE CAPILLARY HYDROPHOBIC POLYMER (C) AND THE MANUFACTURED PRODUCT (D)

The process to obtain the adsorbent and absorbent capillary hydrophobic polymer (C) is characterized by a first phase, necessary to obtain a first component (A), and by a second phase, necessary to obtain a second component (B), and by a third final phase, necessary to obtain the capillary hydrophobic polymer (C) with high adsorbent and absorbent power;
- said first phase of the process, necessary to obtain the first component (A), comprising the following steps:
   in a first container (E17) rotating at 1350 (±20%) RPM, all the sub-components (a-1), (a-2), (a-3), (a-4), (a-5), (a-6) and (a-7) are mixed for 20 - 30 minutes in order to obtain a first agent (a-0); the first container (E17) may also be a mixer;
   in a second container (E20) rotating at 1400 - 1700 RPM, all the sub components (α-1), (α-2), (α-3), are mixed for 10 - 15 minutes in order to obtain the second agent (α-0);
   in a third container (E-24), rotating at 1/4 - 1/3 RPM, the mentioned first agent and second agent (α-0, α-0) are mixed for 20 - 25 minutes in order to obtain the first component (A); or, alternatively, the content of the second container (E20) is put inside the first container (E17) or vice versa, while lowering the rotation speed to 1/4 - 1/3 RPM to obtain the first component (A);
- said second phase of the process, necessary in order to obtain the second component (B), comprising the following steps:
   in a fourth container (E-36), hermetically closed and isolated from the external atmosphere, rotating at 1/4 - 1/3 RPM, all the sub-components (b-1), (b-2), (b-3) are mixed for 20 - 30 minutes in order to obtain the second component (B);
- said third final phase of the process, necessary in order to obtain the capillary hydrophobic polymer (C) with high adsorbent and absorbent power, comprising the following steps:
   the first component (A) and the second component (B), obtained from the previous phases, are separately conveyed into the injection chamber of an injection machine (E-14) wherein the two components (A;B), in respective percentage weight percentage of between 47% and 53% are mixed to produce the polymer (C).

Some or all of the containers (E-17, E-20, E-24, E-36) may be mixers.

For obtaining a manufactured product, the capillary hydrophobic polymer (C) leaves the injection chamber of the injection machine (E-14) through the exit nozzle of said injection chamber as a cream, to feed a mould connected to said nozzle and start the expansion process together with the forming process, in order to give the final commercial shape to the resulting final manufactured product (D); within 20 - 120 minutes depending on the mould volume, said manufactured product (D) solidifies, reaching the final mechanical proprieties, and is subsequently extracted from the mould.

### ROLE OF THE MAIN COMPONENTS

Component A is responsible for the formation of the adsorption and absorption cells and for guaranteeing biodegradability.

Component B acts on the conversion of the natural oily substances into polymers, giving the polymer (C) its mechanical properties.

The function of the second agent (a-0) is to improve the hydrophobic capabilities.

### DETAILED LIST OF COMPONENTS OF THE COMPOSITION

- vegetable oil (a-1) containing triglycerides and fatty acids with high molecular weight including OH groups; like 12-hydroxil-9 octadecenoic acid;
- deionized water (a-2);
- surfactant (a-3) with an ethoxylation grade between 2 and 6 moles, like nonylphenol ethoxylate;
- aminic catalyst and reaction accelerator (a-4), selected from dimethylcyclohexylamine, dimethylbenzylamine, pentamethyldiethylentriamine or 2-dimethylaminoethyl ether;
- metallic catalyst (a-5) selected from tin octoate or dibutyltin dilaurate;
- mass/volume stabilizer (a-6) selected from vegetable wax or paraffinic oil for controlling moulded product D shrinkage;
- polydimethylsiloxane as cream stabilizing agent (a-7): for controlling the time for which the polymer C remains in the cream phase before expanding in the foam phase;
- expanding agent (α-1), in particular methyl formate (with low toxic grade in comparison with other expanding agents);
- chain extensor agent (α-2) selected from 3-aminomethyl-3,5,5-trimethylcyclohexylamine and monoethylene glycol;
- amorphous synthetic silica superficially treated with polyalkylsiloxane as hydrophobic agent (α-3);
- polymer MDI (b-1) derived from 4,4-diphenylmethane diisocyanate, 2,4-diphenylmethane diisocyanate, 2,2-diphenylmethane diisocyanate, with average functionality between 2.5 and 3;
- 2,4 toluene diisocyanate (b-2);
- flow agent (b-3), like turpentine.

### PERFORMANCE OF THE MANUFACTURED PRODUCT (D)

The capillary hydrophobic polymer (C) may be moulded in various forms and/or machined to create new manufactured products (D), whose shapes are already known, such as floating booms, carpets, floccules, pillows, powders, sheets, rolls, pellets, cords, bands, bags, sacks, etc.

Said manufactured products have very interesting performance, as illustrated below. The absorbent and adsorbent capacity of the manufactured products (D) disclosed is between 3 and 6 times greater, in terms of volume of oily pollutant, than the absorbent and adsorbent capacity of existing commercial products which are polyester-, polystyrene fibre- and polypropylene-based, and is between 6 and 10 times greater than natural products such as straw, sand, sawdust, vermiculite, peat, corn stalks, feathers, glass wool, volcanic ash, which are amongst those well-known in the prior art.

Said performance is due to the larger size of the cells (approximately 6 times the starting diameter of the polymer), as shown by the low specific weight of the manufactured product (between 80 and 150 grams per litre), and is also due to the higher number of re-use cycles of the manufactured product. After each cycle of use of said manufactured product, it is wrung out to recover the oils adsorbed and absorbed, allowing a further re-use cycle.

The initial re-use efficiency is equal to 95% with a gradually decreasing rate. It is possible to reach between 10 and 20 re-use cycles, for heavy oil and light oil respectively.

The high and stable level of hydrophobic performance prevents any loss of the capacity to float of the manufactured product (D) during containing and recovering operations after spills of oil and its derivatives in the sea or in water.

The composition also allows an increase in the speed of absorption of high viscosity pollutant (30%) compared with existing products.

At the end of its useful life, the manufactured product may be used as a fuel due to its high energy content. It may also be disposed of in landfill, since it is biodegradable.

The manufactured products moulded in the form of booms are the ideal solution for containing large spills, on land or in water.

When quickly deployed, they contain spills of oil and chemical substances, preventing pollution of the environment and stopping said pollutants from entering our water supply and drainage systems. Other forms, such as carpets, floccules, pillows, powder, foils, rolls, sheets, pellets, cords, bands and bags are more suitable for industrial and domestic spills.

Another interesting and effective application is use of the manufactured product as a filter for oily pollutant substances leaked in water.

The pollutant is retained by the manufactured product and the water, cleaned in that way, is available at the outfeed of the filter.

## Claims

1. Process for obtaining an adsorbent and absorbent capillary hydrophobic polymer (C), able to contain and remove oil, hydrocarbons and chemical products of non-aqueous matrix in the event of spills or leaks of the same inside or outside of the water, derived from a first component (A) comprising natural oily substances and a second component (B) comprising synthetic oily substances, said polymer (C) **characterized in that** the first component (A) is obtained from a mix of two agents (a-0, α-o), respectively obtained from a mix of sub-components (a-1 - α-7, α-1 - α-3), the first agent (a-0) being obtained from a mix of first sub-components (a-1 - α-7):
- vegetable oil (a-1) derived from palms, coconuts, sunflowers, castor beans, linseed, passion fruit and rapeseed;
- deionized water (a-2);
- a surfactant (a-3) with an ethoxylation grade comprised between 2 and 6 moles, like nonylphenol ethoxylate;
- an aminic catalyst and reaction accelerator (a-4) selected from dimethylcyclohexylamine, dimethylbenzylamine, pentamethyldiethylenetriamine or 2-dimethylaminoethyl ether;
- a metallic catalyst (a-5) selected from tin octoate or dibutyltin dilaurate;
- a mass/volume stabilizer (a-6) selected from vegetable wax or paraffinic oil;
- polydimethylsiloxane as cream stabilizing agent (a-7);
the second agent (α-0) being obtained from a mix of second sub-components (α-1 - α-3);
- an expanding agent (α-1), in particular methyl formate;
- a chain extensor agent (α-2) selected from 3-aminomethyl-3,5,5-trimethylcyclohexylamine and monoethylene glycol;
- amorphous synthetic silica superficially treated with polyalkylsiloxane as hydrophobic agent (α-3);
and **characterized in that** the second component (B) is obtained from a mix/mixture of third sub-components (b-1 - b-3):
- a polymer MDI (b-1) derived from 4,4-diphenylmethane diisocyanate, 2,4-diphenylmethane diisocyanate, 2,2-diphenylmethane diisocyanate, with average functionality between 2.5 and 3;
- 2,4- toluene diisocyanate (b-2);
- a flow agent (b-3), like turpentine,
wherein the process to obtain the adsorbent and absorbent capillary hydrophobic polymer (C) is **characterized by** a first phase, necessary to obtain a first component (A), and by a second phase, necessary to obtain a second component (B), and by a third final phase, necessary to obtain the capillary hydrophobic polymer (C) with high adsorbent and absorbent power;
- said first phase of the process, necessary to obtain the first component (A), comprising the following steps:
in a first container (E17) rotating at 1350 (±20%) RPM, all the sub-components (a-1), (a-2), (a-3), (a-4), (a-5), (a-6) and (a-7) are mixed for 20 - 30 minutes in order to obtain a first agent (a-0); the first container (E17) may also be a mixer;
in a second container (E20) rotating at 1400 - 1700 RPM, all the sub components (α-1), (α-2), (α-3), are mixed for 10 - 15 minutes in order to obtain the second agent (α-0);
in a third container (E-24), rotating at 1/4 - 1/3 RPM, the mentioned first agent and second agent (α-0, α-0) are mixed for 20 - 25 minutes in order to obtain the first component (A); or, alternatively, the content of the second container (E20) is put inside the first container (E17) or vice versa, while lowering the rotation speed to 1/4 - 1/3 RPM to obtain the first component (A);
- said second phase of the process, necessary in order to obtain the second component (B), comprising the following steps:
in a fourth container (E-36), hermetically closed and isolated from the external atmosphere, rotating at 1/4 - 1/3 RPM, all the sub-components (b-1), (b-2), (b-3) are mixed for 20 - 30 minutes in order to obtain the second component (B);
- said third final phase of the process, necessary in order to obtain the capillary hydrophobic polymer (C) with high adsorbent and absorbent power, comprising the following steps:
the first component (A) and the second component (B), obtained from the previous phases, are separately conveyed into the injection chamber of an injection machine (E-14) wherein the two components (A;B), in respective percentage weight percentage of between 47% and 53% are mixed to produce the polymer (C).

2. The process, according to claim 1, **characterized in that** some or all of the containers (E-17, E-20, E-24, E-36) are mixers.

3. The process, according to claims 1 or 2, **characterized in that** the capillary hydrophobic polymer (C) leaves the injection chamber of the injection machine (E-14) through the exit nozzle of said injection chamber as a cream, to feed a mould connected to said nozzle and start the expansion process together with the forming process, in order to give the final commercial shape to the resulting final manufactured product (D); within 20 - 120 minutes depending on the mould volume, said manufactured product (D) solidifies, reaching the final mechanical proprieties, and is subsequently extracted from the mould.

4. Adsorbent and absorbent capillary hydrophobic polymer (C) obtained by the process according to claims 1 or 2.

5. Manufactured products (D) obtained according to the process of claim 3.

6. Manufactured products (D) according to claim 5, **characterized in that** they are moulded and/or machined in the form of booms, carpets, floccules, pillows, powder, foils, rolls, sheets, pellets, cords, bands and bags.

7. Filters **characterized in that** they comprise the manufactured product (D) according to claims 5 or 6.

## Patentansprüche

1. Verfahren, um ein adsorbierendes und absorbierendes, hydrophobes Kapillarpolymer (C) zu erhalten, das dazu imstande ist, Öl, Kohlenwasserstoffe und chemische Produkte einer nichtwässrigen Matrix im Falle von Verschüttungen oder Lecks derselben in oder außerhalb von Wasser zu enthalten und zu entfernen, gewonnen aus einer ersten Komponente (A), die dabei natürliche ölhaltige Stoffe beinhaltet, und einer zweiten Komponente (B), die dabei synthetische ölhaltige Stoffe beinhaltet, besagtes Polymer (C) ist dabei **dadurch gekennzeichnet, dass** die erste Komponente (A) aus einer Mischung von zwei Wirkstoffen (a-0, α-o), die jeweils aus einer Mischung von Unterkomponenten (a-1 - α-7, α-1 - α -3) erhalten werden, erhalten wird, der erste Wirkstoff (a-0) wird dabei aus einer Mischung erster Unterkomponenten (a-1 - a-7) erhalten:
- Pflanzlichem Öl (a-1), das aus Palmen, Kokosnüssen, Sonnenblumen, Rizinussamen, Leinsamen, Passionsfrüchten und Raps gewonnen wird;
- deionisiertem Wasser (a-2);
- einem Tensid (a-3) mit einem Ethoxylisierungsgrad zwischen einschließlich 2 und 6 Mol, wie Nonylphenolethoxylat;
- einem Aminkatalysator und Reaktionsbeschleuniger (a-4), der aus Dimethylcyclohexylamin, Benzyldimethylamin, Pentamethyldiethylentriamin oder Bis(2-dimethylaminoethyl)ether ausgewählt wird;
- einem metallischen Katalysator (a-5), der aus Zinnoktoat oder Dibutylzinndilaurat ausgewählt wird;
- einem Masse-/Volumenstabilisator (a-6), der aus pflanzlichem Wachs oder Paraffinöl ausgewählt wird;
- Polydimethylsiloxan als Schaumstabilisator (a-7);
der zweite Wirkstoff (α-0) wird dabei aus einer Mischung zweiter Unterkomponenten ((α-1 - α-3) erhalten;
- einem Quellmittel (α-1), im Besonderen Methylformiat (Ameisesäuremethylester);
- einem Kettenverlängerungswirkstoff ((α-2), der aus 3-Aminomethyl-3,5,5-trimethylcyclohexylamin und Monoehtylenglykol ausgewählt wird;
amorphem synthetischem Siliciumdioxid, oberflächenbehandelt mit Polyalkylsiloxane als Hydrophobierungsmittel (α-3);
und **dadurch gekennzeichnet, dass** die zweite Komponente (B) aus einer Mischung dritter Unterkomponenten (b-1 - b-3) erhalten wird:
einem Polymer-MDI (b-1), gewonnen aus 4,4-Diphenylmethandiisocyanat, 2,4-Diphenylmethandiisocyanat und 2,2-Diphenylmethandiisocyanat, mit einer durchschnittlichen Funktionalität zwischen 2,5 und 3;
2,4-Toluoldiisocyanat (b-2);
einem Verlaufmittel (b-3) wie Terpentin;
wobei das Verfahren, um das adsorbierende und absorbierende, hydrophobe Kapillarpolymer (C) zu erhalten, durch eine erste Phase gekennzeichnet ist, die notwendig ist, um eine erste Komponente (A) zu erhalten, und durch eine zweite Phase, die notwendig ist, um eine zweite Komponente (B) zu erhalten, und durch eine dritte, letzte Phase, die notwendig ist, um das hydrophobe Kapillarpolymer (C) mit hohem Adsorptions- und Absorptionsvermögen zu erhalten;
besagte erste Phase des Verfahrens, die notwendig ist, um die erste Komponente (A) zu erhalten, beinhaltet dabei folgende Schritte:
in einem ersten Behälter (E17), der dabei mit 1350 (±20 %) U/min rotiert, werden alle Unterkomponenten (a-1), (a-2), (a-3), (a- 4), (a-5), (a-6) und (a-7) 20 - 30 Minuten vermischt, um einen ersten Wirkstoff (a-0) zu erhalten; der erste Behälter (E17) kann auch ein Mixer sein;
in einem zweiten Behälter (E20), der dabei mit 1400 - 1700 U/min rotiert, werden alle Unterkomponenten (α-1), (α-2), (α-3) 10 - 15 Minuten gemischt, um den zweiten Wirkstoff (α-0) zu erhalten;
in einem dritten Behälter (E-24), der dabei mit 1/4 - 1/3 U/min rotiert, werden die erwähnten erster und zweiter Wirkstoff (α-0, α-0) 20 - 25 Minuten gemischt, um die erste Komponente (A) zu erhalten; oder alternativ, der Inhalt des zweiten Behälters (E20) wird in den ersten Behälter (E17) gegeben oder umgekehrt, während die Rotationsgeschwindigkeit auf 1/4 - 1/3 RPM gesenkt wird, um die erste Komponente (A) zu erhalten;
besagte zweite Phase des Verfahrens, die notwendig ist, um die zweite Komponente (B) zu erhalten, beinhaltet dabei folgende Schritte:
in einem vierten Behälter (E-36), der hermetisch verschlossen und von der Außenatmosphäre isoliert ist und dabei mit 1/4 - 1/3 U/min rotiert, werden alle Unterkomponenten (b-1), (b-2), (b-3) 20 - 30 Minuten gemischt, um die zweite Komponente (B) zu erhalten;
besagte dritte, letzte Phase des Verfahrens, die notwendig ist, um das hydrophobe Kapillarpolymer (C) mit hohem Adsorptions- und Absorptionsvermögen zu erhalten, beinhaltet dabei folgende Schritte:
die erste Komponente (A) und die zweite Komponente (B), die aus den vorherigen Phasen erhalten wurden, werden getrennt voneinander in die Injektionskammer einer Spritzgießmaschine (E-14) geleitet, wobei die zwei Komponenten (A;B) in einem jeweiligen Gewichtsanteil zwischen 47 % und 53 % vermischt werden, um das Polymer (C) herzustellen.

2. Das Verfahren nach dem Patentanspruch 1, **dadurch gekennzeichnet, dass** einige oder alle Behälter (E-17, E-20, E-24, E-36) Mixer sind.

3. Das Verfahren nach den Patentansprüchen 1 oder 2, **dadurch gekennzeichnet, dass** das hydrophobe Kapillarpolymer (C) aus der Injektionskammer der Spritzgießmaschine (E-14) durch die Austrittsdüse besagter Injektionskammer als cremige Masse austritt, um eine Form zu beschicken, die mit besagter Düse verbunden ist, und das Expansionsverfahren zusammen mit dem Formungsverfahren zu beginnen, um dem sich daraus ergebenden, hergestellten Endprodukt (D) die endgültige kommerzielle Form zu verleihen; innerhalb von 20 - 120 Minuten, vom Volumen der Form abhängend, verfestigt sich besagtes hergestelltes Produkt (D) und erreicht dabei die endgültigen mechanischen Eigenschaften und wird in der Folge aus der Form extrahiert.

4. Adsorbierendes und absorbierendes, hydrophobes Kapillarpolymer (C), das durch das Verfahren nach den Patentansprüchen 1 oder 2 erhalten wurde.

5. Hergestellte Produkte (D), die nach dem Verfahren des Patentanspruchs 3 erhalten wurden.

6. Hergestellte Produkte (D) nach dem Patentanspruch 5, **dadurch gekennzeichnet, dass** sie in Form von Stangen, Matten, Flocken, Kissen, Pulver, Folien, Rollen, Platten, Pellets, Schnüren, Bändern und Beuteln geformt und/oder bearbeitet sind.

7. Filter, die **dadurch gekennzeichnet sind, dass** sie das hergestellte Produkt (D) nach den Patentansprüchen 5 oder 6 beinhalten.

## Revendications

1. Procédé pour obtenir un polymère (C) hydrophobe capillaire adsorbant et absorbant, capable de retenir et d'éliminer l'huile, les hydrocarbures et les produits chimiques à matrice non aqueuse en cas de déversements ou de fuites de ceux-ci à l'intérieur ou à l'extérieur de l'eau, dérivé d'un premier composant (A) comprenant des substances huileuses naturelles et d'un deuxième composant (B) comprenant des substances huileuses synthétiques, ledit polymère (C) étant **caractérisé en ce que** le premier composant (A) est obtenu à partir d'un mélange de deux agents (a-0, α-o), respectivement obtenus à partir d'un mélange de sous-composants (a-1 - a-7, α-1 - α-3), le premier agent (a-0) étant obtenu à partir d'un mélange de premiers sous-composants (a-1 - α-7) :
- huile végétale (a-1) dérivée de palmiers, noix de coco, tournesols, graines de ricin, graines de lin, fruit de la passion et graines de colza ;
- eau déionisée (a-2) ;
- un tensioactif (a-3) présentant un degré d'éthoxylation compris entre 2 et 6 moles, tel que l'éthoxylate de nonylphénol ;
- un catalyseur aminé et accélérateur de réaction (a-4) choisi parmi la diméthylcyclohexylamine, la diméthylbenzylamine, la pentaméthyldiéthylènetriamine ou l'éther 2-diméthylaminoéthylique ;
- un catalyseur métallique (a-5) choisi parmi l'octoate d'étain ou le dilaurate de dibutylétain ;
- un stabilisant de masse/volume (a-6) choisi parmi une cire végétale ou une huile paraffinique ;
- du polydiméthylsiloxane comme agent stabilisant pour crème (a-7) ;
le deuxième agent (α-0) étant obtenu à partir d'un mélange de deuxièmes sous-composants (α-1 - α-3) ;
- un agent d'expansion (α-1), en particulier le formiate de méthyle ;
- un agent d'allongement de chaîne (α-2) choisi parmi la 3-aminométhyl-3,5,5-triméthylcyclohexylamine et le monoéthylèneglycol ;
- de la silice synthétique amorphe traitée en surface avec du polyalkylsiloxane en tant qu'agent hydrophobe (α-3) ;
et **caractérisé en ce que** le deuxième composant (B) est obtenu à partir d'un mélange de troisièmes sous-composants (b-1 - b-3) :
- un polymère MDI (b-1) dérivé du diisocyanate de 4,4-diphénylméthane, du diisocyanate de 2,4-diphénylméthane, du diisocyanate de 2,2-diphénylméthane, dont la fonctionnalité moyenne est comprise entre 2,5 et 3 ;
- du diisocyanate de 2,4-toluène (b-2) ;
- un agent fluidifiant (b-3), tel que la térébenthine,
dans lequel le procédé pour obtenir le polymère (C) hydrophobe capillaire adsorbant et absorbant est **caractérisé par** une première étape, nécessaire pour obtenir un premier composant (A), et par une deuxième étape, nécessaire pour obtenir un deuxième composant (B), et par une troisième étape finale, nécessaire pour obtenir le polymère (C) hydrophobe capillaire à haut pouvoir adsorbant et absorbant ;
- ladite première étape du procédé, nécessaire pour obtenir le premier composant (A), comprenant les étapes suivantes :
dans un premier récipient (E17) tournant à 1 350 (±20 %) tr/min, tous les sous-composants (a-1), (a-2), (a-3), (a-4), (a-5), (a-6) et (a-7) sont mélangés pendant 20 - 30 minutes de manière à obtenir un premier agent (a-0) ; le premier récipient (E17) peut également être un mélangeur ;
dans un deuxième récipient (E20) tournant à 1 400 - 1 700 tr/min, tous les sous-composants (α-1), (α-2), (α-3), sont mélangés pendant 10 - 15 minutes de manière à obtenir le deuxième agent (α-0) ;
dans un troisième récipient (E-24), tournant à 1/4 - 1/3 tr/min, les premier agent et deuxième agent (α-0, α-0) susmentionnés sont mélangés pendant 20 - 25 minutes de manière à obtenir le premier composant (A) ; ou, alternativement, le contenu du deuxième récipient (E20) est placé à l'intérieur du premier récipient (E17) ou inversement, tout en abaissant la vitesse de rotation à 1/4 - 1/3 tr/min pour obtenir le premier composant (A) ;
- ladite deuxième étape du procédé, nécessaire pour obtenir le deuxième composant (B), comprenant les étapes suivantes :
dans un quatrième récipient (E-36), hermétiquement fermé et isolé de l'atmosphère extérieure, tournant à 1/4 - 1/3 tr/min, tous les sous-composants (b-1), (b-2), (b-3) sont mélangés pendant 20 - 30 minutes de manière à obtenir le deuxième composant (B) ;
- ladite troisième étape finale du procédé, nécessaire pour obtenir le polymère (C) hydrophobe capillaire à haut pouvoir adsorbant et absorbant, comprenant les étapes suivantes :
le premier composant (A) et le deuxième composant (B), obtenus à l'issue des étapes précédentes, sont acheminés séparément dans la chambre d'injection d'un dispositif d'injection (E-14) où les deux composants (A ; B), dans un pourcentage en poids respectif compris entre 47 % et 53 %, sont mélangés pour produire le polymère (C).

2. Le procédé selon la revendication 1, **caractérisé en ce que** certains des, ou tous les, récipients (E-17, E-20, E-24, E-36) sont des mélangeurs.

3. Le procédé selon les revendications 1 ou 2, **caractérisé en ce que** le polymère (C) hydrophobe capillaire sort de la chambre d'injection du dispositif d'injection (E-14) à travers la buse de sortie de ladite chambre d'injection sous forme de crème, pour alimenter un moule relié à ladite buse et commencer le processus d'expansion conjointement au processus de formage, de manière à donner la forme commerciale finale au produit fabriqué (D) fini qui en résulte ; en l'espace de 20 - 120 minutes, selon le volume du moule, ledit produit fabriqué (D) se solidifie, atteignant ses propriétés mécaniques finales, et est ensuite extrait du moule.

4. Polymère (C) hydrophobe capillaire adsorbant et absorbant obtenu par le procédé selon les revendications 1 ou 2.

5. Produits fabriqués (D) obtenus selon le procédé de la revendication 3.

6. Produits fabriqués (D) selon la revendication 5, **caractérisés en ce qu'**ils sont moulés et/ou usinés sous forme de barrières flottantes, tapis, flocons, oreillers, poudre, feuilles, rouleaux, plaques, granulés, cordons, bandes et sacs.

7. Filtres **caractérisés en ce qu'**ils comprennent le produit fabriqué (D) selon les revendications 5 ou 6.
